# EUROPÄISCHE PATENTSCHRIFT

(11) **EP 3 688 736 B1**
(45) Veröffentlichungstag und Bekanntmachung des Hinweises auf die Patenterteilung: **03.11.2021**
(21) Anmeldenummer: 18779621.4
(22) Anmeldetag: 25.09.2018
(51) Int. Cl.: G08C 17/02, H01M 10/0525, H01M 10/48, H02J 7/00, H04Q 9/00

(54) **SYSTEM UND VERFAHREN ZUM ÜBERWACHEN UND FERNSTEUERN EINES LADEZUSTANDS VON ZUMINDEST EINEM AKKUPACK**
SYSTEM AND METHOD FOR MONITORING AND REMOTE CONTROLLING THE CHARGE STATE OF AT LEAST ONE BATTERY PACK
SYSTÈME ET PROCÉDÉ POUR LA SURVEILLANCE ET LA COMMANDE À DISTANCE D'UN ÉTAT DE CHARGE D'AU MOINS UNE BATTERIE

(30) Priorität: 29.09.2017 DE 102017122734
(43) Veröffentlichungstag der Anmeldung: 05.08.2020
(73) Patentinhaber: Einhell Germany AG, 94405 Landau / Isar (DE)
(72) Erfinder: THANNHUBER, DR., Markus, 94405 Landau (DE)
(74) Vertreter: Hofstetter, Schurack & Partner
(86) Internationale Anmeldenummer: PCT/EP2018/075957
(87) Internationale Veröffentlichungsnummer: WO 2019/063541

(56) Entgegenhaltungen:
- CN-A- 106 161 489
- CN-A- 106 960 556
- DE-A1-102016 012 996
- US-A1- 2015 372 518
- US-A1- 2016 046 199

## Beschreibung

Die vorliegende Erfindung betrifft ein System und ein Verfahren zum Überwachen und Fernsteuern eines Ladezustands von zumindest einem Akkupack.

Trotz aller Vorteile haben akkubetriebene Elektrogeräte einen ganz entscheidenden Nachteil gegenüber kabelgebundenen Elektrogeräten in Form der begrenzten Akku-Laufzeit beziehungsweise Akku-Kapazität in Kombination mit den üblicherweise relativ langen Ladezeiten. Ein entscheidender Aspekt für Benutzer solcher akkubetriebenen Elektrogeräte ist insbesondere die Verfügbarkeit der Elektrogeräte. Lässt sich der Tank eines benzinbetriebenen Geräts innerhalb kürzester Zeit befüllen, so muss beispielsweise ein 5,2 Amperestunden-Akku erst circa zwei Stunden in eine Ladeschale, bis er vollständig aufgeladen ist.

Zwar kann man davon ausgehen, dass Akkus in den seltensten Fällen vollkommen entladen gelagert werden. Aber auch bei einer Restladung von beispielsweise 50 Prozent kann man üblicherweise davon ausgehen, dass beispielsweise ein akkubetriebener Rasenmäher mit solch einem Akku nicht mehr dafür verwendet werden kann, um eine herkömmlich große Rasenfläche vollständig zu mähen. Ist der betreffende Akku dann wiederum vollständig aufgeladen oder zumindest ausreichend aufgeladen, ist die Sonne womöglich schon untergegangen. Einer beliebigen Erhöhung von Akkukapazitäten beziehungsweise damit verbundenen Akku-Laufzeiten sind einfach gewisse technische, physikalische und kostenbedingte Grenzen gesetzt.

Druckschrift US 2016/0046199 A1 offenbart ein Zustandssteuersystem für ein Batterieladegerät. Das smarte Ladegerät besitzt eine Kommunikationseinrichtung, mittels der es über ein Kommunikationsnetzwerk mit einem Server und einer Nutzerschnittstelle kommunizieren kann. Gegebenenfalls wird eine Batterie über ein Ladekabel mit dem Ladegerät verbunden.

Ferner beschreibt die Druckschrift US 2015/0372518 A1 eine Vorrichtung zur Informationsdarstellung bezüglich eines Batteriepacks. Basierend auf einer Nutzerhistorie kann eine Zeit zum Laden des Batteriepacks ermittelt und dargestellt werden.

Des Weiteren ist in der Druckschrift CN 106 161 489 A ein Datenübertragungssystem für ein Elektrowerkzeug dargestellt. Ein Server steht mit einer Batterie in Kommunikationsverbindung, welche ihrerseits mit einem Elektrowerkzeug und einem Ladegerät in Kommunikationsverbindung steht.

Es ist die Aufgabe der vorliegenden Erfindung, eine Lösung breitzustellen, mittels welcher die Verfügbarkeit von akkubetriebenen Elektrogeräten gesteigert werden kann.

Diese Aufgabe wird durch ein System sowie durch ein Verfahren zum Überwachen und Fernsteuern eines Ladezustands von zumindest einem Akkupack mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Das erfindungsgemäße System zum Überwachen und Fernsteuern eines Ladezustands von zumindest einem Akkupack umfasst den wenigstens einen Akkupack für ein Elektrogerät. Der Akkupack weist eine Kommunikationseinrichtung auf, die dazu ausgelegt ist, Ladezustandsdaten des Akkupacks an eine Servereinrichtung des Systems zu übertragen, welche dazu ausgelegt ist, die Ladezustandsdaten an wenigstens eine Benutzerschnittstelle des Systems zu übertragen. Die Benutzerschnittstelle ist dazu ausgelegt, die Ladezustandsdaten des Akkupacks zu visualisieren. Zudem ist die Benutzerschnittstelle dazu ausgelegt, in Abhängigkeit von einer an der Benutzerschnittstelle getätigten Benutzereingabe Steuerungsdaten zum Ansteuern eines Ladegeräts an die Servereinrichtung zu übertragen. Diese ist wiederum dazu ausgelegt, die Steuerungsdaten an die in den Akkupack integrierte Kommunikationseinrichtung zu übertragen. Die in den Akkupack integrierte Kommunikationseinrichtung ist ihrerseits dazu ausgelegt, die Steuerungsdaten für einen Ladevorgang des Akkupacks an das Ladegerät zu übertragen. Dabei ist die Servereinrichtung dazu ausgelegt, in Abhängigkeit von Termineinträgen in einem elektronischen Kalender einer Person eine Aufforderung zum Aufladen des Akkupacks an die Benutzerschnittstelle zu übertragen, welche dazu ausgelegt ist, diese Aufforderung zu visualisieren

Alternativ kann es erfindungsgemäß auch vorgesehen sein, dass ein System zum Überwachen und Fernsteuern eines Ladezustands von zumindest einem Akkupack den wenigstens einen Akkupack für ein Elektrogerät aufweist, welcher eine Kommunikationseinrichtung aufweist, die dazu ausgelegt ist, Ladezustandsdaten des Akkupacks an eine Servereinrichtung des Systems zu übertragen. Die übrigen oben genannten Merkmale können in dem Fall auch rein fakultativer Natur sein. Im einfachsten Fall genügt es also, wenn die Ladezustandsdaten bis zum Server gelangen und das System zumindest dazu ausgelegt ist.

Der Akkupack selbst umfasst vorzugsweise ein zusammengeschaltetes Paket mehrerer Akkumulatorzellen, die beispielsweise auf Lithium-Ion-Basis aufgebaut sind. Andere Batterietypen sind aber ebenfalls möglich. Vorzugsweise sind die Akkumulatorzellen des Akkupacks zur Energieversorgung mit der Kommunikationseinrichtung des Akkupacks verbunden. Dadurch kann - sofern die Akkumulatorzellen nicht entleert sind - jederzeit sichergestellt werden, dass die Kommunikationseinrichtung des Akkupacks mit Energie versorgt werden kann, sodass eine permanente Datenübertragung zwischen der Servereinrichtung unter Kommunikationseinrichtung sichergestellt werden kann.

Dem erfindungsgemäßen System liegt die Erkenntnis zugrunde, dass die Laufzeit eines akkubetriebenen Elektrogeräts selbst oftmals für Nutzer nicht wirklich der entscheidende Faktor ist. Ein viel entscheidenderer Aspekt für viele Nutzer ist schlichtweg die Verfügbarkeit eines akkubetriebenen Elektrogeräts zu einem bestimmten Zeitpunkt. Das erfindungsgemäße System liefert einen Beitrag dazu, Benutzer gar nicht erst in eine Situation kommen zu lassen, bei denen sie vor entladenen Akkus stehen.

Dies wird einerseits dadurch erreicht, dass die in den Akkupack integrierte Kommunikationseinrichtung vorzugsweise fortlaufend Ladezustandsdaten des Akkupacks an die Servereinrichtung des System übertragen kann, wobei die Servereinrichtung diese Ladezustandsdaten wiederum an die wenigstens eine Benutzerschnittstelle des Systems übertragen kann. Ein Benutzer kann anhand der Benutzerschnittstelle, welche dazu ausgelegt ist, die Ladezustandsdaten zu visualisieren, an beliebigen Orten und somit beliebig weit entfernt von dem betreffenden Akkupack erkennen, wie voll der Akkupack gerade geladen ist. Darüber hinaus bietet das erfindungsgemäße System die Möglichkeit einer Fernsteuerung des besagten Ladegeräts.

Erkennt der Benutzer anhand der Benutzerschnittstelle, dass der Akkupack, den er beispielsweise in einigen Stunden in einem elektrischen Rasenmäher einsetzen will, nicht den erforderlichen Ladezustand aufweist, um beispielsweise seinen Rasen vollständig zu mähen, so kann er über die Benutzerschnittstelle eine entsprechende Eingabe tätigen, infolgedessen die Benutzerschnittstelle die besagten Steuerungsdaten zum Ansteuern des Ladegeräts erzeugen und an die Servereinrichtung übertragen kann. Von der Servereinrichtung gelangen diese Steuerungsdaten zum Ansteuern des Ladegeräts wiederum an die Kommunikationseinrichtung des Akkupacks, welcher dazu ausgelegt ist, die Steuerungsdaten während des Ladevorgangs an das Ladegerät zu übertragen.

Einerseits ist es mittels des erfindungsgemäßen Systems für einen Benutzer also auf einfache Weise möglich, seine Arbeiten, bei welchen der Akkupack benötigt wird, und die dafür notwendigen Ladevorgänge vorausschauend zu planen. Andererseits kann er zusätzlich auch noch durch die Fernsteuerbarkeit des Ladegeräts den Akkupack rechtzeitig aus der Ferne aufladen, ohne dass er dafür vor Ort sein muss. Zwar muss dafür der Akkupack in das Ladegerät eingesteckt oder im Falle eines induktiven Ladegeräts in entsprechender Nähe des Ladegeräts angeordnet sein, jedoch kann das Starten und Beenden des Ladevorgangs ganz einfach aus der Ferne über die Benutzerschnittstelle gesteuert werden. Dabei ist es nicht erforderlich, dass der Benutzer in der Nähe des Ladegeräts sein muss, um den Akkupack aus dem Ladegerät zu entnehmen, wenn dieser vollständig geladen ist, um diesen vor Überladung zu schützen. Denn genauso gut wie der Benutzer über die Benutzerschnittstelle das Ladegerät aktivieren kann, kann er das Ladegerät auch wiederum aus der Ferne deaktivieren, wenn er über die Benutzerschnittstelle erkennt, dass der betreffende Akkupack vollständig oder zumindest soweit aufgeladen wurden ist, wie es der Benutzer wünscht.

Dreh- und Angelpunkt dieser Überwachungs- und Fernsteuerungsfunktionen bildet dabei die in den Akkupack integrierte Kommunikationseinrichtung. Über diese Kommunikationseinrichtung ist es einerseits möglich, dass den Akkupackt betreffende Daten, insbesondere die Ladezustandsdaten des Akkupacks, über die Servereinrichtung bis zur Benutzerschnittstelle gelangen können, wobei andererseits der Akkupack auch als eine Art Access Point dient, über welchen die Fernsteuerung des Ladegeräts erfolgen kann. Die Kommunikationseinrichtung des Akkupacks ist dabei entsprechend dazu ausgelegt und eingerichtet, eine Datenverbindung zum Ladegerät herzustellen. Im einfachsten Fall kann diese Datenverbindung kabelgebunden erfolgen, wobei alternativ oder zusätzlich natürlich auch eine drahtlose Verbindung möglich ist.

Vorzugsweise ist die Kommunikationseinrichtung des Akkupacks dazu eingerichtet, eine permanente Datenverbindung zwischen dem Ladegerät und der Servereinrichtung, vorzugsweise über eine Internetverbindung, aufrecht zu erhalten. Das erfindungsgemäße System bringt also den Vorteil mit sich, dass einerseits ein Benutzer jederzeit über den Ladezustand des Akkupacks informiert werden kann, wobei der Benutzer zudem andererseits noch eine Fernsteuerung eines Ladevorgangs des Akkupacks initiieren kann. Hierdurch wird der Benutzer optimal darin unterstützt, eine Verfügbarkeit des Akkupacks für verschiedenste Arbeiten und Einsatzgebiete sicherstellen zu können.

Das erfindungsgemäße System kann zudem auch so ausgelegt sein, dass es ein oder mehrere Plugins für unterschiedlichste Apps aufweist. So kann die Benutzerschnittelle beispielsweise in Form eines solchen Plugins in eine App integrierbar sein. Momentan ist beispielsweise die App WeChat sehr verbreitet, vor allem unter chinesisch sprechenden Personen. Beispielsweise könnte das erfindungsgemäße System ein Plugin für solch eine App anbieten. Über das Plugin könnten dann durch das erfindungsgemäße System ermöglichte Dienste und Funktionen in solch eine App integriert werden. Natürlich ist es auch möglich, dass für das System eine eigenständige App zusätzlich oder alternativ angeboten wird.

Eine vorteilhafte Ausführungsform sieht vor, dass die Kommunikationseinrichtung des Akkupacks dazu ausgelegt ist, die Daten über ein Low Power Wide Area Network an die Servereinrichtung zu senden und von dieser zu empfangen. Vorzugsweise ist die Kommunikationseinrichtung dazu eingerichtet, wenigstens einen der folgenden Standards oder Technologien zum Senden und Empfangen der Daten über das Low Power Wide Area Network zu verwenden:
- LoRaWAN;
- Symphony Link;
- LTE-M;
- NarrowBand-loT;
- Weightless-N;
- Weightless-P;
- Weightless-W;
- Wi-Fi HaLow;
- WavIoT NarrowBand Fidelity;
- SigFox;
- Random Phase Multiple Access.

Die Kommunikationseinrichtung umfasst dafür beispielsweise ein Funkmodul, welches dazu ausgelegt ist, die besagten Daten über ein Low Power Wide Area Network zu senden und zu empfangen. Bezüglich des Empfangs und des Versendens von Daten ist die Kommunikationseinrichtung also quasi reichweitenunabhängig. Grundsätzlich kann die physikalische Verbindung zwischen verschiedenen Endgeräten, wie dem Ackupack und weiteren Endgeräten, über lizenzfreie Frequenzen des Radiospektrums oder Mobilfunkfrequenzen stattfinden, wobei die Verbindung zwischen Gateways und Netzwerkservern beispielsweise über IP-Verbindungen erfolgen kann.

Eine weitere vorteilhafte Ausführungsform der Erfindung sieht vor, dass die Kommunikationseinrichtung zudem dazu ausgelegt ist, die vorstehend erwähnten Daten und/oder andere Daten über ein Wireless Local Area Network und/oder über eine Bluetooth-Verbindung zu senden und/oder zu empfangen. Vorzugsweise umfasst die Kommunikationseinrichtung entsprechend dazu ausgelegte Funkmodule, beispielsweise ein WLAN-Funkmodul und/oder ein Bluetooth-Funkmodul.

Sollte der Akkupack beispielsweise im Bereich eines Heimnetzwerks verwendet werden, so kann die Kommunikationseinrichtung des Akkupacks sich in das Heimnetzwerk einwählen. Unter Ausnutzung eines solchen Wireless Local Area Networks können auf einfache Weise und vor allem auch schnell große Datenmengen empfangen und versendet werden. So kann beispielsweise in einem Heimnetzwerk über das WLAN problemlos ein Software-Update für den Akkupack oder das betreffende Elektrogerät mittels des Akkupacks heruntergeladen und aufgespielt werden. Der Akkupack dient in dem Fall also als Access-Point für ein Cloud-basiertes Update. Vorzugsweise ist der Akkupack dazu eingerichtet, ein virales Update einer jeweiligen Firmware des Akkupacks oder des Elektrogeräts, in welchem der Akkupack eingesetzt ist, vorzunehmen. Dafür ist der Akkupack, vorzugsweise die Kommunikationseinrichtung des Akkupacks, dazu eingerichtet, zu überprüfen, ob die auf ihm installierte Firmware und die auf dem Elektrogerät installierte Firmware auf dem gleichen Versionsstand sind, z.B. sobald der Ackupack in das Elektrogerät eingesetzt worden ist. Die Kommunikation zwischen Akkupack und Elektrogerät erfolgt vorzugsweise über ein Bus-System des Elektrogeräts und/oder des Akkupacks. Der Akkupack ist dazu eingerichtet, automatisch für den Ackupack eine neue Firmware von einer Cloud herunterzuladen, falls die Firmware des Akkupacks einen älteren Versionsstand als bei dem Elektrogerät aufweisen sollte. Zudem ist der Akkupack dazu eingerichtet, automatisch für das Elektrogerät eine neue Firmware von einer Cloud herunterzuladen, falls die Firmware des Elektrogeräts einen älteren Versionsstand als bei dem Akkupack aufweisen sollte. Der Akkupack und das Elektrogerät stecken sich also quasi bei der der gemeinsamen Verwendung immer automatisch bezüglich der aktuelleren Firmware an. Unter dem Elektrogerät kann beispielsweise auch das Ladegerät verstanden werden. Dadurch kann sichergestellt werden, dass der Akkupack und das Elektrogerät auf dem gleichen Softwarestand betrieben werden. Infolgedessen können die neusten Funktionen sowohl bei Akkupack als auch beim Elektrogerät immer verwendet und die korrekte Kommunikation zwischen Akkupack und Elektrogerät sichergestellt werden.

In weiterer vorteilhafter Ausgestaltung der Erfindung ist es vorgesehen, dass die Kommunikationseinrichtung des Akkupacks dazu ausgelegt ist, Zustandsdaten bezüglich einer Temperatur des Akkupacks, Fehlerspeichereinträgen des Akkupacks und/oder eines State of Health des Akkupacks an die Servereinrichtung zu übertragen, welche dazu ausgelegt ist die Zustandsdaten an die Benutzerschnittstelle zu übertragen, welche dazu ausgelegt ist, die Daten zu visualisieren. Ein Benutzer des Akkupacks kann also ständig alle relevanten Daten und Parameter bezüglich des Zustands des Akkupacks auch aus der Ferne einsehen. Falls erforderlich oder von ihm zumindest gewünscht, kann er so beispielsweise aus der Ferne auch entsprechend steuernd auf den Ladevorgang einwirken, beispielsweise falls er erkennen sollte, dass die Temperatur des Akkupacks zu hoch sein sollte, gewisse Fehler am Akkupack auftreten und dergleichen. Bei Bedarf kann der Benutzer also einen Ladevorgang beispielsweise einfach beenden. Darüber hinaus kann er aus der Ferne auch jederzeit überwachen, wie es um den Akkupack an sich bestellt ist, beziehungsweise ob der State of Health des Akkupacks kritisch ist oder ob auch anderweitige Fehler aufgetreten sind. Dies trägt ebenfalls dazu bei, die Verfügbarkeit des Akkupacks zu steigern.

In weiterer vorteilhafter Ausgestaltung der Erfindung ist es vorgesehen, dass die Servereinrichtung dazu ausgelegt ist, in Abhängigkeit von den Ladezustandsdaten des Ackupacks und/oder den Zustandsdaten eine Aufforderung zum Aufladen des Akkupacks an eine Benutzerschnittstelle zu übertragen, welche dazu ausgelegt ist, diese Aufforderung zu visualisieren. Vorzugsweise ist das System also dazu ausgelegt, einen Benutzer beim rechtzeitigen Einplanen und Durchführen von Ladevorgängen zu unterstützen. Ist beispielsweise bei der Servereinrichtung personengebunden hinterlegt, dass eine bestimmte Person den Akkupack oder auch weitere Akkupacks für bestimmte Arten von Gartengeräten, wie beispielsweise unter anderem für einen Rasenmäher, verwendet, so können Wetterdaten mit einbezogen werden, um automatisch zu ermitteln, wann der beste Zeitpunkt zum Rasenmähen wäre. Alternativ oder zusätzlich können beispielsweise auch Termineinträge der betreffenden Person in ihrem elektronischen Kalender überprüft werden, um diese mit der Wettervorhersage abzugleichen, sodass noch ein möglicher Termin automatisch vorgeschlagen werden kann, zu dem die Person noch Zeit hätte, bei optimalen Wetterbedingungen den Rasen zu mähen. Insbesondere in Kombination mit den Ladezustandsdaten des Akkupacks und gegebenenfalls auch in Kombination mit den Zustandsdaten des Akkupacks kann so die Servereinrichtung eine optimale Unterstützung liefern, die betreffende Person über die Benutzerschnittstelle, beispielsweise über eine Push-Benachrichtigung, darüber in Kenntnis zu setzen, wann ein Ladevorgang des betreffenden Akkupacks oder auch mehrerer Akkupacks gestartet werden sollte. Dies trägt ebenfalls dazu bei, die Verfügbarkeit des Akkupacks erheblich zu steigern. Zudem ist es auch möglich, anhand von Kalendereinträgen zu erkennen, dass die betreffende Person beispielsweise die nächsten vier gar nicht zu Hause sein wird. In einem solchen Fall kann beispielsweise ein Beladungslevel des Akkupacks, also der SOC, z.B. auf 40% heruntergefahren werden. Dadurch kann die Alterung des Akkupacks reduziert werden.

Eine weitere vorteilhafte Ausführungsform der Erfindung sieht vor, dass die Benutzerschnittstelle in Form einer App für ein mobiles Endgerät, insbesondere für ein Smartphone und/oder für einen Tabletcomputer, ausgebildet ist. Benutzer können also ganz einfach ihr ohnehin meistens mitgeführtes Smartphone beispielsweise dafür nutzen, den Ladezustand von Akkupacks zu überwachen und Ladevorgänge fernzusteuern. Genauso ist es ganz bequem beispielsweise über einen Tabletcomputer möglich, die besagte Benutzerschnittstelle zu verwenden. Die Benutzerschnittstelle oder auch eine weitere Benutzerschnittstelle kann auch in Form einer graphischen Benutzeroberfläche für ein Webbrowser ausgebildet sein. Dies bringt den Vorteil mit sich, dass die Benutzeroberfläche unabhängig von Geräten verwendet werden kann. So kann eine Person sich an einem beliebigen Computer beispielsweise über den jeweiligen Webbrowser einwählen und die Benutzeroberfläche zum Überwachen und Fernsteuern des Ladezustands des Akkupacks verwenden. Dies kann beispielsweise in an sich bekannter Weise über einen Log-in und die Eingabe eines entsprechenden Passworts auf einer Betreiberseite einer Firma erfolgen, welche das System als solches bereitstellt.

Gemäß einer weiteren vorteilhaften Ausführungsform der Erfindung ist es vorgesehen, dass die Kommunikationseinrichtung dazu ausgelegt ist, Daten bezüglich einer verbleibenden Ladedauer des Akkupacks an die Servereinrichtung zu übertragen, welche dazu ausgelegt ist, die Daten an die Benutzerschnittstelle zu übertragen, welche dazu ausgelegt ist, anhand der Daten die verbleibende Ladedauer zu visualisieren. Über die Benutzerschnittstelle kann also auf ganz einfache Weise eingesehen werden, wieviel Zeit noch verstreichen wird, bis der Akkupack voll geladen ist. Für technisch interessierte Benutzer können beispielsweise auch Informationen über einen Ladestrom oder andere Ladeparameter zusätzlich noch übertragen und angezeigt werden. Insbesondere in Kenntnis der verbleibenden Ladedauer des Akkupacks kann eine betreffende Person eventuelle weitere Termine so einplanen, dass sie genau rechtzeitig am Ladegerät eintrifft, wenn der Akkupack voll geladen ist. Wenn beispielsweise mehrere Akkupacks zu dem System gehören, kann die Person so auf einfache Weise ein oder mehrere Akkupacks in bestimmten Elektrogeräten verwenden, beispielsweise bei einem akkubetriebenen Rasenmäher, einer akkubetriebene Heckenschere oder dergleichen. Gleichzeitig kann er über die Benutzerschnittstelle, beispielsweise über eine App an seinem Smartphone, einsehen, wann ein anderer Akkupack, der gerade im Ladegerät steckt, fertig aufgeladen sein wird. So ist es beispielsweise auf bequeme Weise möglich, bei Gartenarbeiten oder auch bei anderen Betätigungen die Arbeiten perfekt so zu planen, dass möglichst unterbrechungsfrei gearbeitet werden kann, da der Benutzer jederzeit Kenntnis darüber hat, wann bestimmte Akkupacks fertig aufgeladen sein werden.

In weiterer vorteilhafter Ausgestaltung der Erfindung ist es vorgesehen, dass die Kommunikationseinrichtung dazu ausgelegt ist, Belegungsdaten bezüglich einer Belegung des Ladegeräts an die Servereinrichtung zu übertragen, welche dazu ausgelegt ist, anhand der Belegungsdaten zu visualisieren, wie viele Akkupacks im Ladegerät angeordnet sind. Weist das Ladegerät eine Vielzahl von Steckplätzen für eine Vielzahl von Ackupacks auf, so kann es vorteilhaft sein, wenn ein Benutzer jederzeit einsehen kann, wie viele seiner Akkupacks gerade in seinem Ladegerät angeordnet sind. Das erleichtert die Suche nach Akkupacks und trägt ebenfalls dazu bei, die Verfügbarkeit der jeweiligen Akkupacks zu erhöhen.

In weiterer vorteilhafter Ausgestaltung der Erfindung ist es vorgesehen, dass die Kommunikationseinrichtung dazu ausgelegt ist, Daten bezüglich einer verbleibenden Laufzeit des Akkupacks an die Servereinrichtung zu übertragen, welche dazu ausgelegt ist, die Daten an die Benutzerschnittstelle zu übertragen, welche dazu ausgelegt ist, anhand der Daten die verbleibende Laufzeit zu visualisieren. Ein Benutzer kann also auch aus der Ferne auf einfache Weise erkennen, wie es um eine verbleibende Laufzeit des Akkupacks bestellt ist. Zur Bestimmung der verbleibenden Laufzeit kann beispielsweise berücksichtigt werden, in welchen Elektrogeräten der Akkupack möglicherweise eingesetzt wird. Vorzugsweise ist es in diesem Zusammenhang auch möglich, dass verschiedene verbleibende Laufzeiten des Akkupacks angezeigt werden, je nach dem in was für einer Art von Elektrogeräten der Akkupack eingesetzt wird. Beispielsweise kann für diejenigen Elektrogeräte, welche der Benutzer besitzt, angezeigt werden, wie es um die jeweils verbleibenden Laufzeiten des Akkupacks bestellt ist. So kann ein Benutzer beispielsweise erkennen, dass zum Rasenmähen unter Verwendung des Akkupacks noch eine bestimmte Laufzeit möglich wäre, wobei zudem angezeigt werden kann, dass bei Verwendung des Akkupacks zum Betreiben einer akkubetriebenen Bohrmaschine beispielsweise eine ganz andere Laufzeit zur Verfügung stünde und dergleichen. Je nachdem, wofür der Benutzer sein Akkupack später noch einsetzen möchte, kann er anhand der verbleibenden Laufzeit selbst entscheiden, ob er den Akkupack überhaupt aufladen sollte oder nicht. Dies trägt ebenfalls dazu bei, die Verfügbarkeit des Akkupacks zu erhöhen.

Eine weitere vorteilhafte Ausführungsform der Erfindung sieht vor, dass die Servereinrichtung dazu ausgelegt ist, gemäß eines vorgebbaren Zeitplans Steuerungsdaten zum Entladen und Laden des Akkupacks an die in den Akkupack integrierte Kommunikationseinrichtung zu übertragen, welche dazu ausgelegt ist, die Steuerungsdaten für einen Entlade- und Ladevorgang des Akkupacks an das Ladegerät zu übertragen. Dies bringt den Vorteil mit sich, dass das Ladegerät beispielsweise auch als permanente Aufbewahrungsmöglichkeit für einen oder auch mehrere Akkupacks verwendet werden kann. Durch die automatische, zyklische Entladung und Aufladung der betreffenden Akkupacks kann gegebenenfalls die Lebensdauer und die Performance der Akkupacks gesteigert werden. Sollten die Akkupacks beispielsweise hauptsächlich in elektrischen Gartengeräten verwendet werden, so könnten die Akkupacks über den Winter auch bei einer längeren Nichtverwendung einfach im Ladegerät verbleiben. Die Servereinrichtung würde in dem Fall dafür sorgen, dass eine automatisierte Fernsteuerung zum Entladen und Aufladen der Akkupacks erfolgt, so dass die Lebensdauer der Akkupacks gegebenenfalls dadurch verlängert werden kann. Werden nun die Akkupacks im Frühjahr wieder verwendet, so kann sichergestellt werden, dass diese einen möglichst optimalen Zustand vor allem im Hinblick auf ihren State of Health aufweisen. Dadurch kann ebenfalls die Verfügbarkeit von einem oder auch mehreren Akkupacks des Systems gesteigert werden. Insbesondere kann auch ein Beladungslevel von einem oder mehreren Akkupacks auf ein niedriges Level, z.B. auf 40% SOC, mittels des Ladegeräts reduziert wird, um die kalendarische Alterung zu reduzieren, während die Akkupacks ohnehin länger nicht benutzt werden. Die Servereinrichtung ist entsprechend dazu ausgelegt, passende Steuerungsdaten zu generieren und über die in den Akkupack integrierte Kommunikationseinrichtung an das Ladegerät zu übertragen. Der wenigstens eine Akkupack kann auch dazu ausgelegt sein, Informationen vom Ladegerät zu empfangen und an die Servereinrichtung zu übertragen.

Gemäß einer weiteren vorteilhaften Ausführungsform der Erfindung ist es vorgesehen, dass die Servereinrichtung dazu ausgelegt ist, die Ladezustandsdaten an eine Kommunikationseinrichtung eines weiteren Akkupacks zu übertragen, welcher dazu ausgelegt ist, die Ladezustandsdaten zu visualisieren, insbesondere anzuzeigen, ob der andere Akkupack voll aufgeladen ist. Alternativ oder zusätzlich kann der weitere Akkupack auch dazu ausgelegt sein, in Abhängigkeit von den Ladezustandsdaten Töne von sich zu geben und/oder haptische Rückmeldungen auszugeben. Wird der weitere Akkupack beispielsweise in einem Gartengerät eingesetzt, so kann der Benutzer während der Arbeiten mit diesem Gartengerät erkennen, ob der andere, im Ladegerät eingesetzte Akkupack bereits voll aufgeladen ist oder wie es um den Ladezustand bestellt ist. Beispielsweise bei Gartenarbeiten ist es also nicht erforderlich, dass ein Benutzer einen Blick auf die Benutzerschnittstelle werfen muss, z.B. an seinem Smartphone oder dergleichen. Stattdessen kann er während der Arbeiten mit einem Elektrogerät, in welchem er den weiteren Akkupack eingesetzt hat, ganz einfach an diesem ablesen, wann der andere Akkupack, welcher gerade aufgeladen wird, vollständig aufgeladen ist.

Das erfindungsgemäße Ladegerät ist dazu ausgelegt, mit dem erfindungsgemäßen System oder einer vorteilhaften Ausführungsform des erfindungsgemäßen Systems zusammenzuwirken, wobei das Ladegerät eine Steuerung aufweist, welche dazu ausgelegt ist, die Steuerungsdaten von der Kommunikationseinrichtung des Akkupacks zu empfangen und einen Ladevorgang in Abhängigkeit von den Steuerungsdaten zu steuern. Darüber hinaus ist die Steuerung des Ladegeräts auch dazu ausgebildet, sämtliche anderen vorstehend erwähnten Daten zu empfangen und entsprechend zu verarbeiten.

Das erfindungsgemäße Verfahren zum Überwachen und Fernsteuern eines Ladezustands von zumindest einem Akkupack erfolgt mittels des erfindungsgemäßen Systems oder mittels einer vorteilhaften Ausführungsform des erfindungsgemäßen Systems, wobei die Kommunikationseinrichtung Ladezustandsdaten des Akkupacks an die Servereinrichtung überträgt, welche die Ladezustandsdaten an die Benutzerschnittstelle überträgt, welche die Ladezustandsdaten des Akkupacks visualisiert.

Des Weiteren überträgt die Benutzerschnittstelle in Abhängigkeit von einer Benutzereingabe Steuerungsdaten zum Ansteuern des Ladegeräts an die Servereinrichtung, welche die Steuerungsdaten an die in den Akkupack integrierte Kommunikationseinrichtung überträgt, welche die Steuerungsdaten für einen Ladevorgang des Akkupacks an das Ladegerät überträgt. Die Servereinrichtung (8) überträgt in Abhängigkeit von Termineinträgen in einem elektronischen Kalender einer Person eine Aufforderung zum Aufladen des Akkupacks an die Benutzerschnittstelle, welche diese Aufforderung visualisiert Vorteilhafte Ausgestaltungen des erfindungsgemäßen Systems sind als vorteilhafte Ausgestaltungen des erfindungsgemäßen Verfahrens und umgekehrt anzusehen, wobei das System insbesondere Mittel zum Durchführen der Verfahrensschritte aufweist.

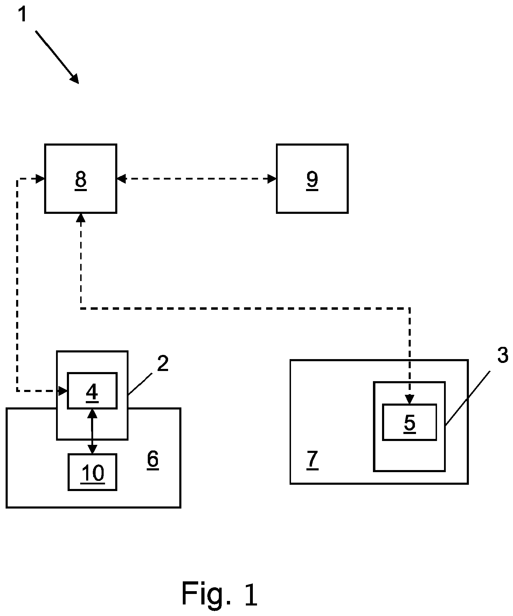

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine stark schematisierte Darstellung eines Systems zum Überwachen und Fernsteuern von Ladezuständen mehrerer Akkupacks.

Ein System 1 zum Überwachen und Fernsteuern jeweiliger Ladezustände mehrerer Akkupacks 2, 3 ist in der einzigen Figur stark schematisiert dargestellt. Die hier dargestellten beiden Akkupacks 2, 3 weisen jeweilige Kommunikationseinrichtungen 4, 5 auf, auf deren Funktionsweise später noch näher eingegangen wird. Der eine Akkupack 2 ist gerade in ein Ladegerät 6 eingesteckt, wobei der andere Akkupack 3 in ein Elektrogerät 7 eingesteckt ist. Bei dem Elektrogerät 7 kann es sich um beliebige Elektrogeräte handeln.

Beispielsweise kann es sich bei dem Elektrogerät 7 um ein Handwerkzeug in Form eines Akkuschraubers, eines Akkubohrers, einer Akkuhandkreissäge oder dergleichen handeln. Ferner kann es sich bei dem Elektrogerät 7 auch um beliebige akkubetriebene Gartengeräte, wie beispielsweise akkubetriebene Laubsauger, akkubetriebene Grasscheren, akkubetriebene Vertikutierer, akkubetriebene Rasenmäher oder dergleichen handeln. Genauso gut kann es sich bei dem Elektrogerät 7 auch beispielsweise um ein akkubetriebenes Haushaltsgerät jeglicher Art handeln. Grundsätzlich kann es sich bei dem Elektrogerät 7 um beliebige Arten von Elektrogeräten handeln, in welchem die Ackupacks 2, 3 eingesetzt werden können.

Zu dem System 1 gehört zudem noch eine Servereinrichtung 8 und wenigstens eine Benutzerschnittstelle 9. Die Benutzerschnittstelle 9 kann beispielsweise durch eine Smartphone-App gebildet werden, welche auf beliebigen Smartphones betrieben werden kann. Entgegen der vorliegenden Darstellung kann das System 1 auch noch beliebige weitere solche Benutzerschnittstellen 9 aufweisen, bei denen es sich beispielsweise auch um eine App für einen Tabletcomputer, eine browserbasierte graphische Benutzeroberfläche und dergleichen handeln kann.

Beide Kommunikationseinrichtungen 4, 5 der Akkupacks 2, 3 sind dazu ausgelegt, verschiedenste Daten über ein Low Power Wide Area Network an die Servereinrichtung 8 zu senden und von dieser zu empfangen. Die Kommunikationseinrichtungen 4, 5 können dabei verschiedenste Standards oder Technologien zum Senden und Empfangen der Daten über das Low Power Wide Area Network verwenden, beispielsweise folgende:
- LoRaWAN.
- Symphony Link;
- LTE-M;
- NarrowBand-loT;
- Weightless-N;
- Weightless-P;
- Weightless-W;
- Wi-Fi HaLow;
- WavIoT NarrowBand Fidelity;
- SigFox;
- Random Phase Multiple Access.

Die Kommunikationseinrichtungen 4, 5 der Akkupacks 2, 3 sind vorzugsweise zudem auch noch dazu ausgelegt, die Daten über ein Wireless Local Area Network und/oder über eine Bluetooth-Verbindung direkt oder auch indirekt - in dem Fall also unter Zwischenschaltung anderer Geräte - an die Servereinrichtung 8 zu übertragen.

Das ganze System 1 dient dazu, jeweilige Ladezustände der Akkupacks 2, 3 zu überwachen und fernzusteuern. Beide Kommunikationseinrichtungen 4, 5 der Akkupacks 2, 3 sind dazu ausgelegt, jeweilige Ladezustandsdaten der Akkupacks 2, 3 an die Servereinrichtung 8 zu übertragen. Die Servereinrichtung 8 ist dazu ausgelegt, diese Ladezustandsdaten an die Benutzerschnittstelle 9 des Systems 1 zu übertragen. So kann ein Benutzer beispielsweise an seinem Smartphone jederzeit an einer entsprechend als Benutzerschnittstelle dienenden App erkennen, wie es um die Ladezustände der beiden Akkupacks 2, 3 bestellt ist.

Zudem bietet die Benutzerschnittstelle 9 die Möglichkeit, dass ein Benutzer das Ladegerät 6 fernsteuern kann. Dazu ist die Benutzerschnittstelle 9 dazu ausgelegt, eine oder auch mehrere diesbezügliche Benutzereingaben zu erfassen und in Abhängigkeit davon Steuerungsdaten zum Ansteuern des Ladegeräts 6 an die Servereinrichtung 8 zu übertragen. Die Servereinrichtung 8 ist ihrerseits dazu ausgelegt, diese Steuerungsdaten wiederum - im vorliegend gezeigten Fall - an die in den Akkupack 2 integrierte Kommunikationseinrichtung 4 zu übertragen. Diese ist dazu ausgelegt, die Steuerungsdaten für einen Ladevorgang des Akkupacks an eine Steuerung 10 des Ladegeräts 6 zu übertragen.

Ein Benutzer kann also auf einfache Weise aus der Ferne zum einen erkennen, wie es um die Ladezustände der jeweiligen Akkupacks 2, 3 an sich bestellt ist. Zudem kann er aus der Ferne über die Benutzerschnittstelle 9 ganz einfach das Ladegerät 6 aktivieren, um den Akkupack 2 aufzuladen.

Handelt es sich beispielsweise bei dem Elektrogerät 7 um einen Rasenmäher, in welchem die Akkupacks 2, 3 verwendet werden können, so kann der Benutzer beispielsweise noch auf der Arbeit sitzend browserbasiert oder auch über sein Smartphone unter Verwendung der Benutzerschnittstelle 9 überprüfen, wie es um die Ladezustände der jeweiligen Akkupacks 2, 3 bestellt ist. Zusätzlich kann es auch noch vorgesehen sein, dass die Servereinrichtung 8 dazu ausgelegt ist, in Abhängigkeit von Wetterdaten, Termineinträgen in einem elektronischen Kalender der betreffenden Person und den Ladezustandsdaten der Akkupacks 2, 3 eine Aufforderung zum Aufladen der Akkupacks 2, 3 an die Benutzerschnittstelle 9 zu übertragen, welche dazu ausgelegt ist, diese Aufforderung zu visualisieren. So kann der Benutzer optimal unterstützt werden, die passende Verfügbarkeit der Akkupacks 2,3 für den Zeitpunkt sicherzustellen, wenn er auch tatsächlich unter Verwendung des Elektrogeräts 7 seinen Rasen mähen möchte.

Zusätzlich können die Kommunikationseinrichtungen 4, 5 auch dazu ausgelegt sein, Zustandsdaten bezüglich einer Temperatur der Akkupacks 2, 3 Fehlerspeichereinträgen der Akkupacks 2, 3 und/oder eines jeweiligen State of Health der Akkupacks 2, 3 an die Servereinrichtung 8 zu übertragen, welche dazu ausgelegt ist, die Zustandsdaten an die Benutzerschnittstelle 9 zu übertragen, welche diese Daten dann entsprechend visualisiert.

Zudem kann im vorliegend gezeigten Fall beispielsweise die Kommunikationseinrichtung 4 des Akkupacks 2 auch eine verbleibende Ladedauer das Akkupacks 2 erfassen und entsprechende Daten an die Servereinrichtung 8 übertragen, welche diese Daten wiederum an die Benutzerschnittstelle 9 überträgt. Der Benutzer kann also aus der Ferne beispielsweise an seinem Smartphone oder an einer anderen geeigneten Stelle einsehen, wie lange es noch dauert, bis der Akkupack 2 vollständig aufgeladen ist. Das System 1 bietet also eine sehr bequeme und zuverlässige Möglichkeit, aus der Ferne verschiedenste Daten bezüglich der Akkupacks 2, 3, insbesondere auch bezüglich ihrer jeweiligen Ladezustände einzusehen und ferngesteuert Ladevorgänge zu initiieren. Dadurch kann eine besonders hohe Verfügbarkeit der Akkupacks 2, 3 sichergestellt werden.

Zudem ist es auch möglich, dass die jeweiligen Kommunikationseinrichtungen 4, 5 der Akkupacks 2, 3 dazu ausgelegt sind, Belegungsdaten bezüglich einer Belegung des Ladegeräts 6 an die Servereinrichtung 8 zu übertragen, welche diese Daten wiederum an die Benutzerschnittstelle 9 überträgt. So ist es beispielsweise möglich, dass die jeweiligen Akkupacks 2, 3 selbständig erkennen, ob sie gerade im Ladegerät 6 eingesteckt sind und diese Information an die Servereinrichtung 8 und somit letztlich auch an die Benutzerschnittstelle 9 übertragen. Alternativ oder zusätzlich ist es auch möglich, dass das Ladegerät 6 selbst über eine entsprechende, hier nicht näher dargestellte Kommunikationseinrichtung verfügt, welche dazu ausgelegt ist, ihren Belegungsstatus bezüglich der gerade eingesteckten Akkupacks 2, 3 an die Servereinrichtung 8 und somit auch an die Benutzerschnittstelle 9 zu übertragen. Ein Benutzer kann so oder so aus der Ferne jederzeit erkennen, wie viele seiner Akkupacks 2, 3 gerade in seinem Ladegerät 6 eingesteckt sind. So kann er auch auf einfache Weise erkennen, wie viele seiner Akkupacks 2, 3 er überhaupt aus der Ferne aufladen könnte.

Ferner können die jeweiligen Kommunikationseinrichtungen 4, 5 der Akkupacks 2, 3 auch dazu ausgelegt sein, Daten bezüglich einer verbleibenden Laufzeit der jeweiligen Akkupacks 2, 3 an die Servereinrichtung 8 und darüber auch an die Benutzerschnittstelle 9 zu übertragen. Über die Benutzerschnittstelle 9 kann ein Benutzer dann einsehen, wie lange er die Akkupacks 2, 3 überhaupt noch verwenden kann, ohne diese vorher aufzuladen. Idealerweise ist beispielsweise auf der Servereinrichtung 8 hinterlegt, welche Arten von Elektrogeräten der Benutzer überhaupt im Einsatz hat. In dem Fall wäre es möglich, auch verschiedene Laufzeiten für die jeweiligen Elektrogerätetypen für die verschiedenen Akkupacks 2, 3 mittels der Benutzerschnittstelle 9 auszugehen. Je nachdem, welche Arten von Elektrogeräten der Benutzer gerade einsetzen möchte, kann er dann anhand dieser Informationen entscheiden, ob er seine Akkupacks 2, 3 besser noch einmal bereits aus der Ferne aufladen sollte.

Darüber hinaus ist es auch möglich, dass die Servereinrichtung 8 gemäß dem hier dargestellten Beispiel dazu in der Lage ist, die Ladezustandsdaten bezüglich des Akkupacks 2 an die Kommunikationseinrichtung 5 des anderen Akkupacks 3 zu übertragen, wobei dieser dazu ausgelegt ist, die Ladezustandsdaten zu visualisieren, insbesondere anzuzeigen, ob der Akkupack 2 voll aufgeladen ist. Dafür kann der Akkupack 3 (genauso wie der andere Akkupack 2) über ein Display verfügen. Alternativ wäre es beispielsweise auch möglich, dass die Akkupacks 2, 3 einfach nur über eine entsprechend geeignete Statusleuchte verfügen, welche beispielsweise entweder rot, gelb oder grün leuchtet, je nachdem wie voll geladen der andere Akkupack 2 beziehungsweise 3 gerade ist. Ferner wäre es auch möglich, dass das Elektrogerät 7 über ein entsprechendes Display verfügt, welches anzeigen kann, wie es gerade um den Ladezustand des im Ladegerät 6 eingesteckten Akkupacks 2 bestellt ist.

Darüber hinaus ist es auch noch möglich, dass die Servereinrichtung 8 dazu ausgelegt ist, gemäß eines vorgebbaren Zeitplans Steuerungsdaten zum Entladen und Laden an die Akkupacks 2, 3, genauer an ihre Kommunikationseinrichtungen 4, 5, zu übertragen. Sobald die Akkupacks 2, 3 mit dem Ladegerät 6 verbunden sind, übertragen die Kommunikationseinrichtungen 4, 5 der Akkupacks 2, 3 diese Steuerungsdaten wiederum an die Steuerung 10 des Ladegeräts 6, welches diese dann für ein zyklisches Entladen und Laden der Akkupacks 2, 3 verwendet. Dadurch ist es möglich, auch bei einer längeren Nichtverwendung der Akkupacks 2, 3 diese im Ladegerät 6 eingesteckt zu lassen, wobei durch das zyklische und automatische Entladen und Laden der Akkupacks 2, 3 ihre Lebensdauer und ihre Performance gesteigert werden kann. Werden die Ackupacks 2, 3 beispielsweise hauptsächlich für Gartengeräte verwendet, so könnte es vorkommen, dass die Akkupacks 2, 3 in den Wintermonaten überhaupt gar nicht verwendet werden. Die Akkupacks 2, 3 könnten dann während der Wintermonate die ganze Zeit im Ladegerät 6 eingesteckt bleiben, wobei die Servereinrichtung 8 dafür sorgt, dass die Akkupacks 2, 3 von Zeit zu Zeit etwas entladen und aufgeladen werden, und zwar so, dass der State of Health der Akkupacks 2, 3 auf einem möglichst hohen Niveau verbleibt.

Das System 1 und das entsprechende Verfahren zum Überwachen und Fernsteuern der Ladezustände der Akkupacks 2, 3 unter Verwendung des Systems 1 tragen also dazu bei, dass auf besonders einfache Weise die Verfügbarkeit von Akkupacks 2, 3 auch aus der Ferne von einem Benutzer sichergestellt werden kann, indem entsprechende Informationen bezüglich der Akkupacks 2, 3 mittels der Benutzerschnittstelle 9 bereitgestellt und zudem über die Benutzerschnittstelle 9 auch Ladevorgänge bezüglich der Akkupacks 2, 3 ferngesteuert ermöglicht werden.

### BEZUGSZEICHENLISTE:

- 1: System
- 2: Akku pack
- 3: Kommunikationseinrichtung des Akkupacks
- 4: weiterer Akkupack
- 5: Kommunikationseinrichtung des weiteren Akkupacks
- 6: Ladegerät
- 7: Elektrogerät
- 8: Servereinrichtung
- 9: Benutzerschnittstelle
- 10: Steuerung

## Patentansprüche

1. System (1) zum Überwachen und Fernsteuern eines Ladezustands von zumindest einem Akkupack (2, 3), umfassend den wenigstens einen Akkupack (2, 3) für ein Elektrogerät (7), welcher eine Kommunikationseinrichtung (4, 5) aufweist, die dazu ausgelegt ist, Ladezustandsdaten des Akkupacks (2, 3) an eine Servereinrichtung (8) des Systems (1) zu übertragen, welche dazu ausgelegt ist, die Ladezustandsdaten an wenigstens eine Benutzerschnittstelle (9) des Systems (1) zu übertragen, welche dazu ausgelegt ist, die Ladezustandsdaten des Akkupacks (2, 3) zu visualisieren, wobei die Benutzerschnittstelle (9) zudem dazu ausgelegt ist, in Abhängigkeit von einer Benutzereingabe Steuerungsdaten zum Ansteuern eines Ladegeräts (6) an die Servereinrichtung (8) zu übertragen, welche dazu ausgelegt ist, die Steuerungsdaten an die in den Akkupack (2, 3) integrierte Kommunikationseinrichtung (4, 5) zu übertragen, welche dazu ausgelegt ist, die Steuerungsdaten für einen Ladevorgang des Akkupacks (2, 3) an das Ladegerät (6) zu übertragen, wobei die Servereinrichtung (8) dazu ausgelegt ist, in Abhängigkeit von Termineinträgen in einem elektronischen Kalender einer Person eine Aufforderung zum Aufladen des Akkupacks (2, 3) an die Benutzerschnittstelle (9) zu übertragen, welche dazu ausgelegt ist, diese Aufforderung zu visualisieren.

2. System (1) nach Anspruch 1,
**dadurch gekennzeichnet, dass**
die Kommunikationseinrichtung (4, 5) des Akkupacks (2, 3) dazu ausgelegt ist, die Daten über ein Low Power Wide Area Network an die Servereinrichtung (8) zu senden und von dieser zu empfangen.

3. System (1) nach Anspruch 2,
**dadurch gekennzeichnet, dass**
die Kommunikationseinrichtung (4, 5) dazu eingerichtet ist, wenigstens einen der folgenden Standards oder Technologien zum Senden und Empfangen der Daten über das Low Power Wide Area Network zu verwenden:
- LoRaWAN.
- Symphony Link;
- LTE-M;
- NarrowBand-loT;
- Weightless-N;
- Weightless-P;
- Weightless-W;
- Wi-Fi HaLow;
- WavIoT NarrowBand Fidelity;
- SigFox;
- Random Phase Multiple Access.

4. System (1) nach einem der vorhergehenden Ansprüche,
**dadurch gekennzeichnet, dass**
die Kommunikationseinrichtung (4, 5) des Akkupacks (2, 3) zudem dazu ausgelegt ist, die Daten und/oder andere Daten über ein Wireless Local Area Network und/oder über eine Bluetooth-Verbindung zu senden und/oder zu empfangen.

5. System (1) nach einem der vorhergehenden Ansprüche,
**dadurch gekennzeichnet, dass**
die Kommunikationseinrichtung (4, 5) des Akkupacks (2, 3) dazu ausgelegt ist, Zustandsdaten bezüglich einer Temperatur des Akkupacks (2, 3), Fehlerspeichereinträgen des Akkupacks (2, 3) und/oder eines State of Health des Akkupacks (2, 3) an die Servereinrichtung (9) zu übertragen, welche dazu ausgelegt ist, die Zustandsdaten an die Benutzerschnittstelle (9) zu übertragen, welche dazu ausgelegt ist, die Daten zu visualisieren.

6. System (1) nach Anspruch 5,
**dadurch gekennzeichnet, dass**
die Servereinrichtung (8) dazu ausgelegt ist, in Abhängigkeit von den Ladezustandsdaten des Akkupacks (2, 3) und/oder den Zustandsdaten eine Aufforderung zum Aufladen des Akkupacks (2, 3) an die Benutzerschnittstelle (9) zu übertragen, welche dazu ausgelegt ist, diese Aufforderung zu visualisieren.

7. System (1) nach einem der vorhergehenden Ansprüche,
**dadurch gekennzeichnet, dass**
die Servereinrichtung (8) dazu ausgelegt ist, in Abhängigkeit von Wetterdaten eine Aufforderung zum Aufladen des Akkupacks (2, 3) an die Benutzerschnittstelle (9) zu übertragen, welche dazu ausgelegt ist, diese Aufforderung zu visualisieren

8. System (1) nach einem der vorhergehenden Ansprüche,
**dadurch gekennzeichnet, dass**
die Benutzerschnittstelle (9) in Form einer App für ein mobiles Endgerät, insbesondere für ein Smartphone und/oder für einen Tabletcomputer, ausgebildet ist.

9. System (1) nach einem der vorhergehenden Ansprüche,
**dadurch gekennzeichnet, dass**
die Benutzerschnittstelle (9) oder eine weitere Benutzerschnittstelle in Form einer graphischen Benutzeroberfläche für einen Webbrowser ausgebildet ist.

10. System (1) nach einem der vorhergehenden Ansprüche,
**dadurch gekennzeichnet, dass**
die Kommunikationseinrichtung (4, 5) dazu ausgelegt ist, Daten bezüglich einer verbleibenden Ladedauer des Akkupacks (2, 3) an die Servereinrichtung (8) zu übertragen, welche dazu ausgelegt ist, die Daten an die Benutzerschnittstelle (9) zu übertragen, welche dazu ausgelegt ist, anhand der Daten die verbleibende Ladedauer zu visualisieren.

11. System (1) nach einem der vorhergehenden Ansprüche,
**dadurch gekennzeichnet, dass**
die Kommunikationseinrichtung (4, 5) dazu ausgelegt ist, Belegungsdaten bezüglich einer Belegung des Ladegeräts (6) an die Servereinrichtung (8) zu übertragen, welche dazu ausgelegt ist, die Belegungsdaten an die Benutzerschnittstelle (9) zu übertragen, welche dazu ausgelegt ist, anhand der Belegungsdaten zu visualisieren, wie viele Akkupacks (2, 3) im Ladegerät (6) angeordnet sind.

12. System (1) nach einem der vorhergehenden Ansprüche,
**dadurch gekennzeichnet, dass**
die Kommunikationseinrichtung (4, 5) dazu ausgelegt ist, Daten bezüglich einer verbleibenden Laufzeit des Akkupacks (2, 3) an die Servereinrichtung (8) zu übertragen, welche dazu ausgelegt ist, die Daten an die Benutzerschnittstelle (9) zu übertragen, welche dazu ausgelegt ist, anhand der Daten die verbleibende Laufzeit zu visualisieren.

13. System (1) nach einem der vorhergehenden Ansprüche,
**dadurch gekennzeichnet, dass**
die Servereinrichtung (8) dazu ausgelegt ist, gemäß eines vorgebbaren Zeitplans Steuerungsdaten zum Entladen und Laden des Akkupacks (2, 3) an die in den Akkupack (2, 3) integrierte Kommunikationseinrichtung (4, 5) zu übertragen, welche dazu ausgelegt ist, diese Steuerungsdaten für einen Entlade- und Ladevorgang des Akkupacks (2, 3) an das Ladegerät (6) zu übertragen.

14. System (1) nach einem der vorhergehenden Ansprüche,
**dadurch gekennzeichnet, dass**
die Servereinrichtung (8) dazu ausgelegt ist, die Ladezustandsdaten an eine Kommunikationseinrichtung (5) eines weiteren Akkupacks (3) zu übertragen, welcher dazu ausgelegt ist, die Ladezustandsdaten zu visualisieren, insbesondere anzuzeigen, ob der andere Akkupack (2) voll aufgeladen ist.

15. Verfahren zum Überwachen und Fernsteuern eines Ladezustands von zumindest einem Akkupack (2, 3) mittels eines Systems (1) nach einem der Ansprüche 1 bis 13, bei welchem
- die Kommunikationseinrichtung (4, 5) Ladezustandsdaten des Akkupacks (2, 3) an die Servereinrichtung (8) überträgt, welche die Ladezustandsdaten an die Benutzerschnittstelle (9) überträgt, welche die Ladezustandsdaten des Akkupacks (2, 3) visualisiert;
- die Benutzerschnittstelle (9) in Abhängigkeit von einer Benutzereingabe Steuerungsdaten zum Ansteuern des Ladegeräts (6) an die Servereinrichtung (8) überträgt, welche die Steuerungsdaten an die in den Akkupack (2, 3) integrierte Kommunikationseinrichtung (4, 5) überträgt, welche die Steuerungsdaten für einen Ladevorgang des Akkupacks (2, 3) an das Ladegerät (6) überträgt, wobei
- die Servereinrichtung (8) in Abhängigkeit von Termineinträgen in einem elektronischen Kalender einer Person eine Aufforderung zum Aufladen des Akkupacks (2, 3) an die Benutzerschnittstelle (9) überträgt, welche diese Aufforderung visualisiert.

## Claims

1. A system (1) for monitoring and remotely controlling a state of charge of at least one battery pack (2, 3), comprising the at least one battery pack (2, 3) for an electrical appliance (7), which battery pack comprises a communication device (4, 5), which is adapted to transfer state of charge data of the battery pack (2, 3) to a server device (8) of the system (1), which server device is adapted to transfer the state of charge data to at least one user interface (9) of the system (1), which user interface is adapted to visualize the state of charge data of the battery pack (2, 3), wherein the user interface (9) is additionally adapted to transfer control data for controlling a charging device (6) to the server device (8) depending on a user input, which server device is adapted to transfer the control data to the communication device (4, 5) integrated in the battery pack (2, 3), which communication device is adapted to transfer the control data for a charging operation of the battery pack (2, 3) to the charging device (6), wherein the server device (8) is adapted to transfer a request for charging the battery pack (2, 3) to the user interface (9) depending on deadline entries in an electronic calendar of a person, which user interface is adapted to visualize this request.

2. The system (1) according to claim 1,
**characterized in that**
the communication device (4, 5) of the battery pack (2, 3) is adapted to transmit the data to and receive it from the server device (8) via a low power wide area network.

3. The system (1) according to claim 2,
**characterized in that**
the communication device (4, 5) is configured to use at least one of the following standards or technologies for transmitting and receiving the data via the low power wide area network:
- LoRaWAN,
- Symphony Link;
- LTE-M;
- NarrowBand-loT;
- Weightless-N;
- Weightless-P;
- Weightless-W;
- Wi-Fi HaLow;
- WavloT NarrowBand Fidelity;
- SigFox;
- Random Phase Multiple Access.

4. The system (1) according to any one of the preceding claims,
**characterized in that**
the communication device (4, 5) of the battery pack (2, 3) is additionally adapted to transmit and/or to receive the data and/or other data via a wireless local area network and/or via a Bluetooth link.

5. The system (1) according to any one of the preceding claims,
**characterized in that**
the communication device (4, 5) of the battery pack (2, 3) is adapted to transfer state data with respect to a temperature of the battery pack (2, 3), to error memory entries of the battery pack (2, 3) and/or to a state of health of the battery pack (2, 3) to the server device (9), which server device is adapted to transfer the state data to the user interface (9), which user interface is adapted to visualize the data.

6. The system (1) according to claim 5,
**characterized in that**
the server device (8) is adapted to transfer a request for charging the battery pack (2, 3) to the user interface (9) depending on the state of charge data of the battery pack (2, 3) and/or the state data, which user interface is adapted to visualize this request.

7. The system (1) according to any one of the preceding claims,
**characterized in that**
the server device (8) is adapted to transfer a request for charging the battery pack (2, 3) to the user interface (9) depending on weather data, which user interface is adapted to visualize this request.

8. The system (1) according to any one of the preceding claims,
**characterized in that**
the user interface (9) is formed in the form of an app for a mobile terminal, in particular for a smartphone and/or for a tablet computer.

9. The system (1) according to any one of the preceding claims,
**characterized in that**
the user interface (9) or a further user interface is formed in the form of a graphical user interface for a web browser.

10. The system (1) according to any one of the preceding claims,
**characterized in that**
the communication device (4, 5) is adapted to transfer data with respect to a remaining charging time of the battery pack (2, 3) to the server device (8), which server device is adapted to transfer the data to the user interface (9), which user interface is adapted to visualize the remaining charging time based on the data.

11. The system (1) according to any one of the preceding claims,
**characterized in that**
the communication device (4, 5) is adapted to transfer occupancy data with respect to an occupancy of the charging device (6) to the server device (8), which server device is adapted to transfer the occupancy data to the user interface (9), which user interface is adapted to visualize how many battery packs (2, 3) are arranged in the charging device (6) based on the occupancy data.

12. The system (1) according to any one of the preceding claims,
**characterized in that**
the communication device (4, 5) is adapted to transfer data with respect to a remaining runtime of the battery pack (2, 3) to the server device (8), which server device is adapted to transfer the data to the user interface (9), which user interface is adapted to visualize the remaining runtime based on the data.

13. The system (1) according to any one of the preceding claims,
**characterized in that**
the server device (8) is adapted to transfer control data for discharging and charging the battery pack (2, 3) to the communication device (4, 5) integrated in the battery pack (2, 3) according to a presettable schedule, which communication device is adapted to transfer this control data for a discharging and charging operation of the battery pack (2, 3) to the charging device (6).

14. The system (1) according to any one of the preceding claims,
**characterized in that**
the server device (8) is adapted to transfer the state of charge data to a communication device (5) of a further battery pack (3), which battery pack is adapted to visualize the state of charge data, in particular to display if the other battery pack (2) is fully charged.

15. A method for monitoring and remotely controlling a state of charge of at least one battery pack (2, 3) by means of a system (1) according to any one of claims 1 to 13, in which
- the communication device (4, 5) transfers state of charge data of the battery pack (2, 3) to the server device (8), which server device transfers the state of charge data to the user interface (9), which user interface visualizes the state of charge data of the battery pack (2, 3);
- the user interface (9) transfers control data for controlling the charging device (6) to the server device (8) depending on a user input, which server device transfers the control data to the communication device (4, 5) integrated in the battery pack (2, 3), which communication device transfers the control data for a charging operation of the battery pack (2, 3) to the charging device (6), wherein
- the server device (8) transfers a request for charging the battery pack (2, 3) to the user interface (9) depending on deadline entries in an electronic calendar of a person, which user interface visualizes this request.

## Revendications

1. Système (1) pour la surveillance et la commande à distance d'un état de charge d'au moins un bloc-batterie (2, 3), comprenant ledit au moins un bloc-batterie (2, 3) pour un appareil électrique (7) qui présente un dispositif de communication (4, 5) qui est conçu pour transmettre des données d'état de charge du bloc-batterie (2, 3) à un dispositif serveur (8) du système (1), lequel dispositif serveur est conçu pour transmettre les données d'état de charge à au moins une interface utilisateur (9) du système (1) qui est conçue pour visualiser les données d'état de charge du bloc-batterie (2, 3), l'interface utilisateur (9) étant en outre conçue pour transmettre, en fonction d'une entrée utilisateur, des données de commande pour piloter un chargeur (6) au dispositif serveur (8) qui est conçu pour transmettre les données de commande au dispositif de communication (4, 5) intégré dans le bloc-batterie (2, 3) et qui est conçu pour transmettre les données de commande pour un processus de charge du bloc-batterie (2, 3) au chargeur (6), le dispositif serveur (8) étant conçu pour transmettre, en fonction d'entrées de rendez-vous sur un calendrier électronique d'une personne, une demande de recharge du bloc-batterie (2, 3) à l'interface utilisateur (9) qui est conçue pour visualiser cette demande.

2. Système (1) selon la revendication 1, **caractérisé en ce que** le dispositif de communication (4, 5) du bloc-batterie (2, 3) est conçu pour envoyer les données au dispositif serveur (8) et pour les recevoir de celui-ci par un réseau étendu basse consommation.

3. Système (1) selon la revendication 2, **caractérisé en ce que** le dispositif de communication (4, 5) est aménagé pour utiliser au moins l'une des normes ou technologies suivantes pour l'émission et la réception des données par le réseau étendu basse consommation :
- LoRaWAN ;
- Symphony Link ;
- LTE-M ;
- NarrowBand-IoT ;
- Weightless-N ;
- Weightless-P ;
- Weightless-W ;
- Wi-Fi HaLow ;
- WavIoT NarrowBand Fidelity ;
- SigFox ;
- Random Phase Multiple Access.

4. Système (1) selon l'une quelconque des revendications précédentes, **caractérisé en ce que** le dispositif de communication (4, 5) du bloc-batterie (2, 3) est en outre conçu pour envoyer et/ou recevoir les données et/ou d'autres données par un réseau local sans fil et/ou par une liaison Bluetooth.

5. Système (1) selon l'une quelconque des revendications précédentes, **caractérisé en ce que** le dispositif de communication (4, 5) du bloc-batterie (2, 3) est conçu pour transmettre des données d'état concernant une température du bloc-batterie (2, 3), des entrées de mémoire des erreurs du bloc-batterie (2, 3) et/ou un état général du bloc-batterie (2, 3) au dispositif serveur (9) qui est conçu pour transmettre les données d'état à l'interface utilisateur (9) qui est conçue pour visualiser les données.

6. Système (1) selon la revendication 5, **caractérisé en ce que** le dispositif serveur (8) est conçu pour transmettre, en fonction des données d'état de charge du bloc-batterie (2, 3) et/ou des données d'état, une demande de recharge du bloc-batterie (2, 3) à l'interface utilisateur (9) qui est conçue pour visualiser cette demande.

7. Système (1) selon l'une quelconque des revendications précédentes, **caractérisé en ce que** le dispositif serveur (8) est conçu pour transmettre, en fonction de données météorologiques, une demande de recharge du bloc-batterie (2, 3) à l'interface utilisateur (9) qui est conçue pour visualiser cette demande.

8. Système (1) selon l'une quelconque des revendications précédentes, **caractérisé en ce que** l'interface utilisateur (9) est réalisée sous la forme d'une appli pour un terminal mobile, en particulier pour un smartphone et/ou pour une tablette.

9. Système (1) selon l'une quelconque des revendications précédentes, **caractérisé en ce que** l'interface utilisateur (9) ou une autre interface utilisateur est réalisée sous la forme d'une interface utilisateur graphique pour un navigateur web.

10. Système (1) selon l'une quelconque des revendications précédentes, **caractérisé en ce que** le dispositif de communication (4, 5) est conçu pour transmettre des données concernant une durée de charge restante du bloc-batterie (2, 3) au dispositif serveur (8) qui est conçu pour transmettre les données à l'interface utilisateur (9) qui est conçue pour visualiser la durée de charge restante à l'aide des données.

11. Système (1) selon l'une quelconque des revendications précédentes, **caractérisé en ce que** le dispositif de communication (4, 5) est conçu pour transmettre des données d'occupation concernant une occupation du chargeur (6) au dispositif serveur (8) qui est conçu pour transmettre les données d'occupation à l'interface utilisateur (9) qui est conçue pour visualiser à l'aide des données d'occupation combien de blocs-batteries (2, 3) sont disposés dans le chargeur (6) .

12. Système (1) selon l'une quelconque des revendications précédentes, **caractérisé en ce que** le dispositif de communication (4, 5) est conçu pour transmettre des données concernant une durée de fonctionnement restante du bloc-batterie (2, 3) au dispositif serveur (8) qui est conçu pour transmettre les données à l'interface utilisateur (9) qui est conçue pour visualiser à l'aide des données la durée de fonctionnement restante.

13. Système (1) selon l'une quelconque des revendications précédentes, **caractérisé en ce que** le dispositif serveur (8) est conçu pour transmettre, selon un programme prédéfinissable, des données de commande pour la décharge et la charge du bloc-batterie (2, 3) au dispositif de communication (4, 5) intégré dans le bloc-batterie (2, 3) et qui est conçu pour transmettre au chargeur (6) ces données de commande pour un processus de décharge et de charge du bloc-batterie (2, 3).

14. Système (1) selon l'une quelconque des revendications précédentes, **caractérisé en ce que** le dispositif serveur (8) est conçu pour transmettre les données d'état de charge à un dispositif de communication (5) d'un autre bloc-batterie (3) qui est conçu pour visualiser les données d'état de charge, en particulier pour afficher si l'autre bloc-batterie (2) est complètement chargé.

15. Procédé pour la surveillance et la commande à distance d'un état de charge d'au moins un bloc-batterie (2, 3) au moyen d'un système (1) selon l'une quelconque des revendications 1 à 13, dans lequel
- le dispositif de communication (4, 5) transmet des données d'état de charge du bloc-batterie (2, 3) au dispositif serveur (8) qui transmet les données d'état de charge à l'interface utilisateur (9) qui visualise les données d'état de charge du bloc-batterie (2, 3) ;
- l'interface utilisateur (9) transmet, en fonction d'une entrée utilisateur, des données de commande pour piloter le chargeur (6) au dispositif serveur (8) qui transmet les données de commande au dispositif de communication (4, 5) intégré dans le bloc-batterie (2, 3) et qui transmet les données de commande pour un processus de charge du bloc-batterie (2, 3) au chargeur (6), dans lequel
- le dispositif serveur (8) transmet, en fonction d'entrées de rendez-vous dans un calendrier électronique d'une personne, une demande de recharge du bloc-batterie (2, 3) à l'interface utilisateur (9) qui visualise cette demande.
